# EUROPÄISCHE PATENTSCHRIFT

(11) **EP 3 817 957 B1**
(45) Veröffentlichungstag und Bekanntmachung des Hinweises auf die Patenterteilung: **26.07.2023**
(21) Anmeldenummer: 19723787.8
(22) Anmeldetag: 11.05.2019
(51) Int. Cl.: B60T 8/40, B60T 8/42

(54) **BREMSSYSTEMDÄMPFVORRICHTUNG**
BRAKE-SYSTEM DAMPING DEVICE
DISPOSITIF D'AMORTISSEMENT DE SYSTÈME DE FREINAGE

(30) Priorität: 07.07.2018 DE 102018211246; 15.11.2018 DE 102018219605
(43) Veröffentlichungstag der Anmeldung: 12.05.2021
(73) Patentinhaber: Robert Bosch GmbH, 70442 Stuttgart (DE)
(72) Erfinder: NAVRUZ, Yakup, 74078 Heilbronn (DE); KURZ, Edgar, 74081 Heilbronn-Horkheim (DE); SCHULLER, Wolfgang, 74389 Cleebronn (DE); KURZ, Holger, 70374 Stuttgart (DE)
(86) Internationale Anmeldenummer: PCT/EP2019/062107
(87) Internationale Veröffentlichungsnummer: WO 2020/011421

(56) Entgegenhaltungen:
- EP-A1- 2 105 363
- EP-A2- 0 921 049
- DE-A1- 19 948 444
- US-A1- 2014 000 740

## Beschreibung

### Stand der Technik

Die Erfindung betrifft eine Bremssystemdämpfvorrichtung mit einem ersten Raum, an den hydraulischer Druck anzulegen ist, und einem zweiten Raum, in dem sich ein kompressibles Medium befindet, und einem ersten Trennelement zum Abtrennen des ersten Raumes vom zweiten Raum.

Bremssysteme, insbesondere Hydraulikbremssysteme, dienen zum Verzögern einer Fahrgeschwindigkeit von Fahrzeugen, wie etwa PKWs und LKWs. Im Betrieb solcher Bremssysteme treten verschiedene dynamische Effekte auf, unter anderem Druckschwankungen in dort vorhandenen Leitungen und Räumen, die zu Schwingungen bzw. Pulsationen und dadurch zu unerwünschten Geräuschen und Vibrationen führen. Um solche Schwingungen zu minimieren bzw. eine Dämpfwirkung bei diesen Schwingungen zu erzielen, werden Bremssystemdämpfvorrichtungen, im Folgenden auch Dämpfer genannt, an einem oder mehreren Einbauorten im Bremssystem eingesetzt. Diese Dämpfer umfassen einen ersten Raum, in dem ein hydraulischer Druck anzulegen ist. Der Raum ist grundsätzlich eine Art Behälter. Der Druck ist grundsätzlich das Ergebnis einer auf eine Fläche einwirkenden Kraft. In den Dämpfern wird eine Kraft hydraulisch, das heißt über eine unter Druck stehende Flüssigkeit, übertragen.

Bekannt sind Dämpfer mit einem Trennelement, welches den Raum in einen ersten Raum, in dem sich eine Flüssigkeit bzw. ein Fluid befindet, und einen zweiten Raum trennt, in dem sich ein kompressibles Medium, in der Regel in Form eines Gases, befindet. Das Volumen eines Raumes eines verformbaren Behälters, in dem sich ein Gas befindet, nimmt bekanntlich ab, wenn von außen ein erhöhter Druck auf diesen Behälter ausgeübt wird. Genauso nimmt mittels des Trennelements auch das Volumen des zweiten Raumes ab, wenn am ersten Raum ein hydraulischer Druck anliegt.

Lässt dieser Druck wieder nach, so nimmt entsprechend auch das Volumen des Gases und somit des zweiten Raumes wieder zu. Der zweite Raum wirkt also wie eine pneumatische Feder, auch Gasfeder genannt. Wie weich oder hart diese Gasfeder dämpft, ist abhängig vom Gasvolumen des zweiten Raumes. Je größer das Gasvolumen, umso weicher die Dämpfung.

Bei einem Bremsvorgang tritt ein Fahrzeugführer auf ein Bremspedal, welches dabei einen Pedalweg zurücklegt. Dieser Pedalweg steht in direktem Zusammenhang zum Gasvolumen des hier relevanten zweiten Raumes. Je größer das Gasvolumen ist, umso länger ist auch der Pedalweg. Der positive Effekt einer weichen Dämpfung steht somit dem negativen Effekt einer großen Pedalweglänge gegenüber.

Aus DE 199 48 444 A1 ist ein Schwingungsdämpfer zur Dämpfung von Druckmittelschwingungen in einem hydraulischen Bremssystem von Kraftfahrzeugen bekannt. Dabei weist der Schwingungsdämpfer eine in einer Bohrung eines Gehäuses angeordnete, randseitig dicht eingespannte Membran auf, welche auf ihrer einen Seite einem Druckmittel ausgesetzt ist. Auf der anderen Seite der Membran sind zwei Hohlräume begrenzt, welche mit Atmosphärendruck in Verbindung stehen.

Der Erfindung liegt die Aufgabe zugrunde, eine Vorrichtung zur Schwingungsdämpfung in einem Bremssystem mit verbesserten Dämpfeigenschaften bereitzustellen.

### Offenbarung der Erfindung

Erfindungsgemäß ist eine Bremssystemdämpfvorrichtung geschaffen mit einem ersten Raum, an den hydraulischer Druck anzulegen ist, und einem zweiten Raum, in dem sich ein kompressibles Medium befindet, und einem ersten Trennelement zum Abtrennen des ersten Raumes vom zweiten Raum. Die Aufgabe ist erfindungsgemäß nach Anspruch 1 dadurch gelöst, dass die Bremssystemdämpfvorrichtung einen dritten Raum aufweist, in dem sich ebenfalls das kompressible Medium befindet, sowie ein zweites Trennelement zum Abtrennen des zweiten Raumes vom dritten Raum. Dabei ist der zweite Raum mit dem dritten Raum mittels eines in dem zweiten Trennelement gestalteten Durchlasses mediumleitend verbunden. Zudem ist mit dem ersten Trennelement ein Verschlusselement zu bewegen, mittels dem der Durchlass zu verschließen ist bzw. verschlossen wird, sobald in dem ersten Raum der hydraulische Druck einen vordefinierten Druckwert erreicht hat.

Der dritte Raum enthält also wie der zweite Raum das kompressible Medium, welches vorzugsweise mit einem Gas und besonders bevorzugt mit Luft gestaltet ist. Das zweite Trennelement separiert den dritten vom zweiten Raum, wobei die beiden Räume aber zunächst mittels des mediumleitenden Durchlasses verbunden bleiben. Der Durchlass bzw. die Anbindung ist vorzugsweise mit einer einfachen Bohrung gestaltet und mittels des Verschlusselements des ersten Trennelements verschließbar. Vorzugsweise handelt es sich bei dem Verschlusselement einfach um einen Flächenbereich auf der Oberfläche des ersten Trennelements. Dieses Verschlusselement verschließt erst dann den Durchlass, wenn ein dafür ausreichender hydraulischer Druck in dem ersten Raum anliegt. Konkret ist das erste Trennelement insbesondere ab dem vordefinierten Druckwert soweit verformt, dass es dann an dem zweiten Trennelement anliegt. Das zweite Trennelement bildet also vorzugsweise einen Anschlag für das Verschlusselement.

Aufgrund des verschlossenen Durchlasses ist der dritte Raum dann vom zweiten Raum abgekoppelt und steht somit nicht mehr für den restlichen Dämpfer zur Verfügung. Für die weitere Dämpfwirkung oberhalb des vordefinierten Druckwerts verbleibt nur noch das Mediumvolumen im zweiten Raum. Dieses ist aufgrund des in Richtung des zweiten Trennelements verformten ersten Trennelements nun relativ klein. Somit hat der erfindungsgemäße Dämpfer nur noch eine geringere Elastizität und Dämpfwirkung, denn der zweite Raum kann kaum noch Volumen aufnehmen. Der vorteilhafte Effekt dabei ist aber, dass sich nun ein Pedalweg bzw. der Weg eines Bremspedals des Bremssystems bei einer Betätigung mittels eines Fahrzeugführers nicht mehr wesentlich verlängert. Besonders vorteilhaft liegt das erste Trennelement bei Verschluss des Durchlasses sogar vollständig an der Innenwand des zweiten Raumes, einschließlich der dem zweiten Raum zugewandten Seite des zweiten Trennelements an, sodass der zweite Raum gänzlich verschwindet bzw. kein Volumen mehr hat. Dann verlängert sich der Pedalweg ab dem vordefinierten Druckwert überhaupt nicht mehr. Die dadurch ebenfalls wegfallende Dämpfwirkung ist vertretbar, denn der für die Dämpfung relevante Druckbereich liegt unterhalb des vordefinierten Druckwerts.

Der Druckwert ist also vorzugsweise so gewählt bzw. vordefiniert, dass er den oberen Grenzwert eines für die Dämpfung relevanten Druckbereichs darstellt. Die jeweiligen Volumen des zweiten und dritten Raumes sind dabei bevorzugt auf den relevanten Druckbereich und die gewünschte Elastizität bzw. Dämpfwirkung des Dämpfers abgestimmt. Auf diese vorteilhafte Weise verbindet der Dämpfer die große Elastizität des großen Mediumvolumens im für die Dämpfung relevanten Druckbereich mit einer Begrenzung des von dem ersten Raum aufnehmbaren Volumens oberhalb dieses Druckbereichs. Mit anderen Worten, es besteht keine direkte Abhängigkeit mehr zwischen dem verdrängten Volumen an Bremsmedium zum für die Dämpfung verwendeten Mediumvolumen. Der Dämpfer bietet somit hervorragende Dämpfungseigenschaften bei kurzem Pedalweg.

Ein weiterer Vorteil der Erfindung ist, dass der Druck im abgeschlossenen dritten Raum deutlich niedriger ist, als der Druck im zweiten Raum ohne Durchlass zu einem weiteren Raum, also beim Stand der Technik, wäre. Dadurch werden unerwünschte Effekte reduziert. Zum einen verringert sich bei geringerem Druck die Permeation durch das erste Trennelement, zum anderen ist die Temperatur des Mediums bei geringerem Druck nicht so hoch, wodurch eine Materialalterung des ersten Trennelements verzögert wird.

Mithilfe der aufgeführten technischen Vorteile können Kundenakzeptanz und Marktchancen von Fahrzeugen, die mit der erfindungsgemäßen Bremssystemdämpfvorrichtung ausgestattet sind, deutlich erhöht werden.

Bei einer vorteilhaften Weiterbildung der Erfindung ist das erste Trennelement einstückig mit dem Verschlusselement ausgebildet. Einstückig bedeutet, dass zwei Elemente, hier das erste Trennelement und das Verschlusselement, in einem Stück bzw. als ein Teil geformt sind. Dies hat den Vorteil einer einfachen Montage und preiswerten Herstellung.

Bei einer zweiten vorteilhaften Weiterbildung der Erfindung ist das erste Trennelement mit einer Membran, vorzugsweise mit einer Rollmembran gestaltet. Membrane sind hier grundsätzlich als Dichtelemente zu verstehen, die als elastische, bewegliche Trennwände bzw. Trennelemente zwei Räume hermetisch gegeneinander abtrennen. Speziell Rollmembrane sind dabei nur für eine einseitige Druckbelastung in Richtung einer Schlaufeninnenseite bzw. Membrankopfsenke vorgesehen. Volumenänderungen setzen Rollmembrane nur eine vernachlässigbar geringe Eigensteifigkeit bzw. einen geringen Widerstand gegen elastische Verformung entgegen. Rollmembrane sind also aufgrund ihrer Formgebung besonders gut als Trennelement für die erfindungsgemäße Bremssystemdämpfvorrichtung geeignet.

Bei einer dritten vorteilhaften Weiterbildung der Erfindung ist das erste Trennelement aus einem Elastomer, vorzugsweise aus Ethylen-Propylen-Dien-Kautschuk, hergestellt. Elastomere sind formfeste, aber elastisch verformbare Kunststoffe. Diese Kunststoffe können sich daher bei Zug und Druckbelastung verformen, finden aber danach in ihre ursprüngliche, unverformte Gestalt zurück. Somit sind Elastomere besonders gut geeignete Werkstoffe für Trennelemente im Sinne dieser Erfindung, wie zum Beispiel für die oben beschriebene Rollmembran.

Das Elastomer muss seine Elastizität behalten und darf weder zuviel quellen noch schrumpfen. Deshalb muss für das abzudichtende Medium ein geeignetes Elastomer verwendet werden. Ethylen-Propylen-Dien-Kautschuk, auch kurz EPDM genannt, ist ein gegen Bremsmedium beständiges Elastomer und daher für den Einsatz in der erfindungsgemäßen Bremssystemdämpfvorrichtung besonders geeignet.

Zudem ist erfindungsgemäß vorteilhaft der vordefinierte Druckwert mit einem Wert zwischen 0 und 30 bar, vorzugsweise zwischen Bereich 3 und 10 bar, und besonders bevorzugt mit 5 bar vordefiniert. Wenn ein Bremssystem einen Druck von etwa 60 bar an ein zugehöriges Rad eines Fahrzeugs anlegt, bewirkt dies sicher eine Blockade des Rades. Für die Schwingungs- bzw. Pulsationsdämpfung in Bremssystemen ist aber nur ein deutlich kleinerer, begrenzter Druckbereich relevant. Bei einem erreichten Druckwert von etwa 5 bar ist die störende Schwingung bzw. Pulsation bereits ausreichend gedämpft. Daher ist der Druckwert besonders vorteilhaft auf diesen Wert festzulegen.

Ferner ist der Durchlass bevorzugt mit einem offenporigen Material gebildet. Offenporig ist ein Material, wenn es Poren enthält, die das Eindringen von Flüssigkeiten verhindern, aber das Austreten bzw. Durchdringen von Gasen erlaubt. Man spricht auch von einem atmungsaktiven Material. Die Poren würden nach Anliegen des ersten Trennelements ebenso verschlossen werden, wie anders gestaltete Durchlässe, wie beispielsweise Bohrungen. Der Vorteil des offenporigen Materials liegt aber darin, dass keine Flüssigkeit in den dritten Raum eindringen kann. Das Bremssystem hätte so einen zusätzlichen Schutz gegen ein Auslaufen von Bremsflüssigkeit aus dem Bremssystem, beispielsweise wenn das erste Trennelement beschädigt oder undicht ist.

Darüber hinaus sind in dem zweiten Trennelement vorzugsweise mehrere Durchlässe vorgesehen. Diese Durchlässe sorgen beim Bremsvorgang für eine schnellere Umverteilung des Mediums von dem zweiten in den dritten Raum. Dadurch kann die Elastizität des gesamten Mediumvolumens besser ausgeschöpft werden.

In einer weiteren vorteilhaften Ausführungsform ist der dritte Raum in mehrere Teilräume unterteilt, die jeweils mit dem zweiten Raum mittels eines Durchlasses mediumleitend verbunden sind. Die mehreren Teilräume erlauben eine höhere Flexibilität gegenüber der Nutzung nur eines einzelnen dritten Raumes. So werden die Durchlässe zu den einzelnen Teilräumen vorzugsweise nacheinander mittels des ersten Trennelements verschlossen, wodurch die Dämpfwirkung stufenweise verringert wird, und nicht vollständig und plötzlich bei dem einen vordefinierten Druckwert. Außerdem ist mittels Verschließen und Wiederverfügbarmachen von Durchlässen eine variable Anzahl an Teilräumen und somit ein varialbles Mediumvolumen nutzbar. Dies erleichtert die Abstimmung des Dämpfers auf den relevanten Druckbereich und die gewünschte Elastizität.

Erfindungsgemäß vorteilhaft ist der dritte Raum mittels des zweiten Trennelements und eines Deckels gebildet. Der Deckel ist als Verschluss für ein Bremssystem mit der erfindungsgemäßen Bremssystemdämfvorrichtung vorgesehen, und ermöglicht einen flexiblen Zugang zu dem Bremssystem. Dadurch ist ein einfaches Austauschen des zweiten Trennelements möglich. Zudem können Bremssystemdämpfvorrichtungen, die bisher nur einen Raum zwischen dem Deckel und einem elastischen Trennelement zur Dämpfung nutzen, mit dem zweiten Trennelement nachgerüstet werden.

Darauf aufbauend ist das zweite Trennelement von dem Deckel und dem ersten Trennelement vollständig umschlossen. Dadurch sind der zweite und dritte Raum mit dem enthaltenen Mediumvolumen zusätzlich abgedichtet. Eine vollständige Umschließung des zweiten Trennelements bedeutet zudem, dass sich die Kombination dieser drei Komponenten äußerlich nicht von einer Kombination nur aus Deckel und erstem Trennelement unterscheidet. Dadurch ist die Gestaltung des zweiten Trennelements unabhängig vom weiteren Bremssystem. Sogar eine Entnahme des zweiten Trennelements aus dem Dämpfer ist so möglich, bevorzugt wenn ein größeres Mediumvolumen benötigt wird.

Ferner sind weitere Ausführungsformen vorteilhaft, welche die Bremssystemdämpfvorrichtung noch effizienter machen oder mit alternativen Ausführungsformen ergänzen.

So ist das kompressible Medium, welches im zweiten und dritten Raum enthalten ist vorzugsweise als ein Gas, und besonders bevorzugt als Luft gestaltet. Luft ist leicht verfügbar, ohne Kosten einsetzbar und komprimierbar, und somit hervorragend für den Einsatz in der erfindungsgemäßen Bremssystemdämpfvorrichtung geeignet.

Die Mediumvolumen bzw. der zweite und dritte Raum sind alternativ und vorteilhaft mittels einer Kombination mehrerer Dreh-, Kaltschlag- oder Tiefziehteile hergestellt bzw. geschaffen. Drehteile sind Bauteile mit kreisförmigem Querschnitt, Kaltschlagteile sind Verschlussbauteile und Tiefziehteile sind Karosseriebauteile von Fahrzeugen. Alle diese Bauteile sind also in der Automobilbranche leicht zu beschaffen und erhalten mittels der Erfindung einen neuen Verwendungszweck.

Darüber hinaus ist die Bremssystemdämpfvorrichtung bevorzugt für eine Verwendung in Fahrdynamikregelungen und/oder Fremdkraftbremssystemen vorgesehen. Eine Fahrdynamikregelung bzw. Elektronisches Stabilitätsprogramm, auch ESP genannt, ist ein elektronisch gesteuertes Fahrassistenzsystem für ein Kraftfahrzeug, das durch gezieltes Abbremsen einzelner Räder dem Ausbrechen des Kraftfahrzeugs entgegenwirkt. Ein Fremdkraftbremssystem bzw. eine Fremdkraftbremsanlage wird mittels fremd erzeugter Kraft bedient. Beispielsweise ist eine elektrohydraulisch betätigte Bremse eine Fremdkraftbremse, bei der die Betätigungsenergie aus einem hydraulischen Druckspeicher kommt, der von einer Pumpe aufgeladen wird.

In einer vorteilhaften Ausführungsform weist die Bremssystemdämfvorrichtung eine das zweite Trennelement stützende und den dritten Raum durchsetzende Rippenstruktur insbesondere mit einer Strukturendseite und mindestens einer Strukturrippe auf. Die Rippenstruktur ist dabei vorzugsweise an dem zweiten Trennelement auf der dem ersten Trennelement abgewandten Seite bzw. der Seite mit der Trennelementaußenwand angeordnet, um das zweite Trennelement gegen einen auf die Trennelementinnenwand wirkenden Druck abzustützen. Die Trennelementaußenwand bildet somit eine erste Endseite der Rippenstruktur. Die gegenüberliegende bzw. zweite Endseite der Rippenstruktur wird von der Strukturendseite gebildet, die vorzugsweise planar gestaltet ist. Die Strukturrippe ist ein tragendes Element der stützenden Rippenstruktur und erstreckt sich von der Trennelementaußenwand bis zu der Strukturendseite. Aufgrund der stützenden Funktion der Rippenstruktur ist die Bremssystemdämfvorrichtung in sich stabiler. Zudem wird das Material des zweiten Trennelements weniger beansprucht, was sich positiv auf dessen Lebensdauer auswirkt.

Bevorzugt ist die Rippenstruktur mit zwei oder mehr Strukturrippen gestaltet, um der Rippenstruktur weitere Stabilität zu geben. Außerdem ist die Rippenstruktur vorteilhaft mit einem senkrechten Kreishohlzylinder ausgebildet, der mittig an der Trennelementaußenwand ansetzt, und sich von dieser abgehend bis zu dem zweiten Ende der Rippenstruktur bzw. der Strukturendseite erstreckt. Ein in dem Kreishohlzylinder ausgebildeter Zylinderhohlraum ist dabei bevorzugt mit dem Durchlass in dem zweiten Trennelement mediumleitend verbunden. An dieser Stelle soll explizit darauf hingewiesen werden, dass der Durchlass in dem zweiten Trennelement in keinem Fall von der Rippenstruktur verschlossen sein darf.

Die Strukturrippen setzen außen an dem Kreishohlzylinder an und haben an diesen Stellen - im Folgenden Ansatzstellen genannt - eine Ausdehnung bzw. Rippentiefe, welche der Länge des Kreishohlzylinders entspricht. Von diesen Ansatzstellen erstrecken sich die Strukturrippen vorzugsweise radial bzw. strahlenförmig von dem Kreishohlzylinder weg, wodurch eine sternenförmige Struktur entsteht. Dabei variiert die Rippentiefe einer jeden Strukturrippe entsprechend der Form der anliegenden Endseiten der Rippenstruktur. Wie bereits erwähnt, ist die Strukturendseite vorzugsweise planar und verursacht somit keine Variierung der Rippentiefe. Die Trennelementaußenwand hingegen ist meist uneben bzw. dreidimensional gestaltet. Die jeweilige Rippentiefe muss dann variieren bzw. entsprechend der Trennelementaußenwand gestaltet sein. Die Stabilität der Rippenstruktur wird dadurch weiter verbessert.

Vorzugsweise bildet die Rippenstruktur mindestens zwei Strukturteilräume, die mittels mindestens eines Verbindungskanals mediumleitend miteinander verbunden sind. Die Strukturteilräume sind dabei jeweils mittels mindestens einer Strukturrippe, der Trennelementaußenwand und einer weiteren, den dritten Raum umgebenden Komponente gebildet. Diese Komponente ist, wie oben bereits erwähnt, vorzugsweise der Deckel. Die Strukturteilräume sind dabei vorzugsweise derart angeordnet, dass eine stützende Rippenstruktur entsteht oder der Stützeffekt der Rippenstruktur weiter verstärkt wird. Der Verbindungskanal ist eine Öffnung in einem Element, bevorzugt einer Strukturrippe, welche die zwei Strukturräume voneinander trennt. Auf diese Weise gelangt das kompressible Medium von dem zweiten Raum in jeden der Strukturteilräume des aufgeteilten dritten Raums und entfaltet somit eine maximale Dämpfung für die Bremssystemdämpfvorrichtung. Zudem ist aber auch mittels Abschotten einzelner Strukturteilräume bzw. Verschließen einzelner Verbindungskanäle - sofern gewünscht - ein geringerer Dämpfungsgrad einstellbar.

Ist die Rippenstruktur mit dem Kreishohlzylinder gestaltet, wie oben für eine vorteilhafte Ausführungsform beschrieben, führt zu jedem der Strukturteilräume ein Verbindungskanal vorzugsweise von diesem Zylinderhohlraum aus. Auf diese Weise kann eine gleichmäßige Ausbreitung des Mediums, und somit eine gleichstarke Belastung aller Bereiche der Rippenstruktur erreicht werden.

Wie oben bereits erwähnt, ist das kompressible Medium vorzugsweise als ein Gas, und besonders bevorzugt als Luft gestaltet. Daher werden im Folgenden der dritte Raum auch als zweite Luftkammer, die Strukturteilräume auch als Luftteilkammern und das Mediumvolumen auch als Luftvolumen bezeichnet. Demnach wurde die zweite Luftkammer durch mehrere verbundene Luftteilkammern ersetzt, die ein Luftvolumen aufnehmen, wobei mittels der Luftteilkammern eine gewünschte abgestufte Dämpfung der Bremssystemdämpfvorrichtung einstellbar ist. Mit anderen Worten, die vorgeschlagene Bauweise bietet Gestaltungsmöglichkeiten für die Verbindung der Luftkammern mittels der Verbindungskanäle.

Zudem ist das zweite Trennelement nicht nur zum Abtrennen des zweiten Raumes von dem dritten Raum bzw. von der zweiten Luftkammer vorgesehen, sondern erfüllt vorzugsweise auch eine Halte- bzw. Tragefunktion für das erste Trennelement. Das erste Trennelement ist, wie bereits oben erwähnt, vorteilhaft mit einer Membran gestaltet. Daher wird das zweite Trennelement im Folgenden auch als Membranträgerbauteil bezeichnet. Mittels der beschriebenen Rippenstruktur entsteht ein in sich stabiles Membranträgerbauteil, das zudem mehrere Gestaltungsmöglichkeiten des dritten Raums bzw. dessen Aufteilung bietet. Außerdem erlaubt die beschriebene Gestalt des Membranträgerbauteils den Einsatz kostengünstiger formgebundener Bauteile, die beispielsweise mittels Technologien wie Spritzgießen hergestellt werden können.

In einer weiteren vorteilhaften Ausführungsform weist die Rippenstruktur einen Rippenmantel auf, der die Rippenstruktur umgebend und insbesondere mit einer Mantelaußenwand sowie einer Mantelinnenwand gestaltet ist. Der Rippenmantel ist eine Art Hohlzylinder, welcher die Rippenstruktur umschließt und sich von der Trennelementaußenwand bis zur Strukturendseite erstreckt. Die Mantelaußenwand liegt dabei an der den dritten Raum umgebenden Komponente an. Die Mantelinnenwand bildet eine Fläche, bis zu der sich die Strukturrippen erstrecken. Mit dem Rippenmantel ist die Rippenstruktur kompakter und noch stabiler gestaltet.

Bevorzugt sind die Rippenstruktur und der Rippenmantel einstückig gestaltet, vorzugsweise einstückig mit dem zweiten Trennelement. Einstückig bedeutet, wie bereits erwähnt, dass mehrere Elemente, hier die Rippenstruktur mit dem Rippenmantel, sowie vorzugsweise auch mit dem zweiten Trennelement in einem Stück bzw. als ein Teil geformt sind. Der Vorteil liegt hier in einer einfachen Montage und preiswerten Herstellung.

Zudem ist erfindungsgemäß vorteilhaft der Rippenmantel mit mindestens einem Mantelschlitz gestaltet, wobei der Mantelschlitz sich vorzugsweise von der Strukturendseite in Richtung der Trennelementaußenwand erstreckend angeordnet und dafür vorgesehen ist, den Rippenmantel zu einem der Strukturteilräume hin zu öffnen. Die Mantelschlitze bilden also Aussparungen in dem sonst vollständig geschlossenen Rippenmantel. Mittels dieser Aussparungen bzw. Freiräume vergrößert sich das aufnehmbare Volumen für das kompressible Medium, wodurch der Dämpfungsgrad der Bremssystemdämpfvorrichtung erhöht wird. Zudem wird Material eingespart.

Ferner ist der Rippenmantel vorzugsweise mit mindestens einem Rastelement gestaltet, wobei das Rastelement vorzugsweise von der Mantelaußenwand abstehend und vorzugsweise an der Strukturendseite angeordnet ist. Das Rastelement ist ein Noppen oder Haken, der dafür vorgesehen ist, in eine Ausnehmung innerhalb der die Mantelaußenwand umgebenden Komponente einzurasten. Somit bietet das Rastelement die Möglichkeit, das zweite Trennelement in dem dritten Raum zu verankern. Die Bremssystemdämpfvorrichtung gewinnt dadurch zusätzliche Stabilität.

Darauf aufbauend ist das Rastelement an zwei Mantelschlitzen anliegend angeordnet. Die zwei Mantelschlitze führen jeweils direkt an dem Rastelement entlang, wodurch eine flexible bzw. eindrückbare Trägereinrichtung für das Rastelement gebildet wird. Das zweite Trennelement lasst sich somit leichter montieren bzw. zu einer Einraststelle führen. Besonders dann, wenn das zweite Trennelement aus einem nur sehr schwer verformbaren Material hergestellt ist, wird deren Montage mittels der gebildeten Trägereinrichtung deutlich erleichtert.

Erfindungsgemäß vorteilhaft weist die Bremssystemdämfvorrichtung ein den Rippenmantel umfassendes Bauteil mit einer Bauteilinnenwand auf, bei welchem die Bauteilinnenwand mit einer die Mantelaußenwand umlaufenden Vertiefung gestaltet ist, wobei die Vertiefung zum Einrasten des Rastelements vorgesehen ist. Das Bauteil ist vorzugsweise der Deckel oder das Gehäuse der Bremssystemdämpfvorrichtung. Die Bauteilinnenwand bzw. eine an dem Rippenmantel bzw. deren Mantelaußenwand anliegende Fläche des Bauteils bildet zusammen mit den an der Mantelaußenwand angeordneten Rasthaken eine formschlüssige Verbindung zwischen dem zweiten Trennelement bzw. Membranträgerbauteil und dem umliegenden Bauteil, bevorzugt dem Deckel. Die Vertiefung ist bevorzugt die oben beschriebene Ausnehmung. Da die Vertiefung in dem umliegenden Bauteil umlaufend, aber das mindestens eine Rastelement hingegen einzeln gestaltet ist, ist diese formschlüssige Verbindung flexibel und auf das Rastelement bezogen positionsunabhängig.

Darüber hinaus ist die Strukturendseite an der Bauteilinnenwand anliegend angeordnet, um sich an dieser abzustützen. Das Anliegen an der Bauteilinnenwand erhöht den Stützeffekt der Rippenstruktur und reduziert die Flächenpressung an der Bauteilinnenwand, vorzugsweise dem Deckel, erheblich. Dadurch sind für das Membranträgerbauteil bzw. das zweite Trennelement anstelle von sehr festem Materialen, wie bevorzugt aus zerspantem Metall, auch weichere und/oder kostengünstigere Materialen verwendbar. Auch günstige formgebundene Bauteile sind so als Membranträgerbauteil einsetzbar.

In einer vorteilhaften Ausführungsform ist das zweite Trennelement mittels Spritzgießen, vorzugsweise mittels Pulverspritzgießen und besonders bevorzugt mittels Metallpulverspritzgießen hergestellt. Das Spritzgießen, auch als Spritzguss oder Spritzgussverfahren bezeichnet, ist ein Fertigungsverfahren, genauer ein Urformverfahren zur Herstellung von Bauteilen. Dabei wird mit einer Spritzgießmaschine der jeweilige Werkstoff verflüssigt und unter Druck in eine Form eingespritzt. Das Pulverspritzgießen, auch PIM-Verfahren - englisch für Powder Injection Moulding - ist ein Urformverfahren zur Herstellung von Bauteilen aus Metall oder Keramik. Folglich ist das Metallpulverspritzgießen, auch MIM-Verfahren - englisch für Metal Injection Moulding - ein Urformverfahren zur Herstellung speziell von metallischen Bauteilen. Mittels dieser Technologien ist das zweite Trennelement bzw. das Membranträgerbauteil sehr einfach und kostengünstig als formgebundenes Bauteil herstellbar.

Bei einer vorteilhaften Weiterbildung der Erfindung weist die Bremssystemdämpfvorrichtung einen vierten Raum auf, welcher den Rippenmantel des zweiten Trennelements umgebend angeordnet ist, um zusätzlich dämpfendes Volumen bereitzustellen. Der vierte Raum ist dadurch realisiert, dass die den Rippenmantel umgebene Komponente, vorzugsweise der Deckel, kleiner bzw. kürzer gestaltet ist. Damit bildet der vierte Raum eine weitere abkoppelbare Kammer zum zusätzlichen Aufnehmen von Mediumvolumen, vorzugsweise Luftvolumen, ohne den Platzbedarf innerhalb der Bremssystemdämpfvorrichtung zu vergrößern. Je größer das verfügbare Volumen ist, desto elastischer und somit wirkungsvoller hinsichtlich Pulsationsreduzierung bzw. Dämpfung ist die Bremssystemdämfvorrichtung. Diese vorgeschlagene Lösung eröffnet somit eine Möglichkeit zur Funktionsoptimierung ohne Zusatzaufwand und Kosten.

Zudem ist das zweite Trennelement mit einem den Rippenmantel umschließenden Auflagering mit einem Ringaußenrand gestaltet, wobei der Auflagering in den vierten Raum hineinragend und an dem ersten Trennelement anliegend angeordnet ist. Der Auflagering liegt dabei fest an der Mantelaußenwand des Ringmantels an und erstreckt sich von diesem radial, vorzugsweise soweit, wie es die Größe des vierten Raums maximal erlaubt. Der Ringaußenrand begrenzt den Auflagering nach außen und liegt vorzugsweise an einer Innenwand des vierten Raums an. Mit der anliegenden Anordnung des Auflagerings an dem ersten Trennelement, vorzugsweise eine Membran, wird der vierte Raum in Richtung des ersten Trennelements begrenzt und das erste Trennelement dabei gestützt bzw. stabilisiert. Dies trägt auch zur Stabilität der gesamten Bremssystemdämpfvorrichtung bei. Zudem bildet das zweite Trennelement bzw. Membranträgerbauteil nun eine Auflagefläche eines außen umlaufenden Dichtbereichs des ersten Trennelements, vorzugsweise der Membran.

Ferner ist das zweite Trennelement bevorzugt mit dem Auflagering einstückig gestaltet. Einstückig gestaltet heißt, wie bereits oben erwähnt, dass zwei Elemente in einem Stück bzw. als ein Teil geformt sind, mit dem Vorteil einer einfachen Montage und preiswerten Herstellung.

In einer weiteren vorteilhaften Weiterbildung der Erfindung ist an dem Auflagering mindestens eine den Auflagering stützende Ringrippe angeordnet. Die Ringrippe ist also ein tragendes bzw. stützendes Element, welches vorzugsweise nicht nur an dem Auflagering, sondern auch an der Mantelaußenwand des Ringmantels und/oder der Innenwand des vierten Raums anliegend angeordnet ist. Dadurch wird der Auflagering zusätzlich stabilisiert.

Darauf aufbauend sind an dem Auflagering vorzugsweise zwei oder mehr Ringrippen angeordnet, mit denen der vierte Raum in mindestens zwei Ringteilräume aufgeteilt ist. Die Ringteilräume sind dabei vorteilhaft jeweils mittels zweier Ringrippen, der Innenwand des vierten Raums, der Mantelaußenwand des Ringmantels und dem Auflagering gebildet. Dabei sind die Ringteilräume sogenannte Kammern, die zu ihrer äußeren radialen Abgrenzung eine unveränderte Schnittstellenbohrung in einer den vierten Raum umgebenden Komponente, vorzugsweise dem Gehäuse, nutzen. Diese neue Gestaltung des zweiten Trennelements bildet also an seinem Umfang zusätzliche Ringteilräume, bevorzugt Luftkammern aus, die zur weiteren Verstärkung und Einstellbarkeit der Dämpfung nutzbar sind.

In einer weiteren Ausführungsform sind die Ringrippen auf der Mantelaußenwand jeweils gegenüber einer Strukturrippe auf der Mantelinnenwand angeordnet. Diese Anordnung, bei welcher die Ringrippen eine Art Verlängerung der Strukturrippen bilden, bringt zusätzliche Stabilität für das zweite Trennelement und vereinfacht zudem deren Herstellung.

Die Mantelschlitze sind vorzugsweise derart angeordnet, dass sie den dritten Raum mit dem vierten Raum mediumleitend verbinden. Mittels dieser Anordnung wirken die Mantelschlitze als Verbindungskanäle zwischen den Strukturteilräumen in dem dritten Raum und den Ringteilräumen in dem vierten Raum. Mit anderen Worten, das Volumen von einzelnen umliegenden Kammern ist mittels Längsschlitzen, die übrigens an den Rastelementen, vorzugsweise Rasthaken, ausgebildet sind, an das innenliegende Volumen, vorzugsweise Luftvolumen, der Rippenstruktur angekoppelt. Auf diese Weise gelangt das kompressible Medium von den Strukturteilräumen in die Ringteilräume und entfaltet somit die maximale Dämpfung für die Bremssystemdämpfvorrichtung. Zudem ist aber auch hier mittels Abschotten einzelner Ringteilräume bzw. Verschließen einzelner Mantelschlitze - sofern gewünscht - ein geringerer Dämpfungsgrad einstellbar.

Erfindungsgemäß vorteilhaft ist die mindestens eine Ringrippe sich von der Mantelaußenwand bis an den Ringaußenrand des Auflagerings erstreckend angeordnet. Diese Anordnung nutzt den vierten Raum effektiv aus, gibt dem Auflagering eine sehr hohe Stabilität und ermöglicht eine Abdichtung zwischen den Ringteilräumen.

In einer weiteren vorteilhaften Weiterbildung der Erfindung weist das den Rippenmantel umfassende Bauteil eine Bauteilaußenwand auf, wobei die Bauteilaußenwand dichtend an die Gehäuseinnenwand angelegt ist. Das den Rippenmantel umfassende Bauteil ist, wie bereits oben erwähnt, vorzugsweise der Deckel. In einer solchen bevorzugten Ausführungsform wird die Dichtheit der Bremssystemdämpfvorrichtung nach außen hin zwischen Gehäuse und dem Deckel ausgebildet. Die Dichtheit der Bremssystemdämpfvorrichtung ist somit besonders nachhaltig gewährleistet, denn keine bei Bremsvorgängen beanspruchten Komponenten, wie dem ersten oder zweiten Trennelement, müssen zur Dichtheit beitragen.

Besonders vorteilhaft ist das den Rippenmantel umfassende Bauteil, vorzugsweise der Deckel, derart gestaltet und angeordnet ist, dass die Ringrippen des zweiten Trennelements in dem Deckel eingerastet bzw. verrastet sind. Dadurch ist das Bauteil zusätzlich in der Bremssystemdämpfvorrichtung befestigt bzw. gesichert. Zudem sind die Ringteilräume auf diese Weise besser gegeneinander abgedichtet.

Zudem ist die Gehäuseinnenwand vorzugsweise dadurch dichtend an die Bauteilaußenwand angelegt, dass das den Rippenmantel umfassende Bauteil in das Gehäuse mittels Einpressen eingefügt ist. Einpressen ist ein Verfahren, bei dem die zu verbindenden Teile beim Zusammenfügen im Wesentlichen nur elastisch verformt werden und ungewolltes Lösen durch eine kraftschlüssige Verbindung verhindert wird. Kraftschlüssige Verbindungen setzen eine NormalKraft auf die miteinander zu verbindenden Flächen voraus. Ihre gegenseitige Verschiebung ist verhindert, solange die durch die Haftreibung bewirkte GegenKraft nicht überschritten wird.

Bevorzugt erfolgt das Einpressen mittels eines Einpressbefestigers. Somit müsste das den Rippenmantel umfassende Bauteil, vorzugsweise der Deckel, als Einpressbefestiger gestaltet sein. Das Einpressen eines Einpressbefestigers wird auch als Self-Clinch-Technik bezeichnet. Einpressbefestiger bzw. Self-Clinching-Fastener sind selbstklemmende bzw. selbstschließende Befestigungselemente, welche ohne Schweißen oder Zusatzbefestigern an Metallblechen, Substraten oder Öffnungen in duktilem bzw. verformbarem Material anbringbar sind.

In einer weiteren vorteilhaften Weiterbildung der Erfindung ist Membranhalteeinrichtung des zweiten Trennelements wulst- und/oder trompetenförmig nach außen gespreizt gestaltet. Das erste Trennelement ist dadurch fester und dichter an der Gehäuseinnenwand fixiert. Außerdem wird so eine Bewegen des Verschlusselements und der Membranfalte in Richtung des zweiten Trennelements besser geführt, sowie ein formschlüsseligeres Anliegen des ersten Trennelements an der Trennelementinnenwand des zweiten Trennelements begünstigt.

Nachfolgend werden Ausführungsbeispiele der erfindungsgemäßen Lösung anhand der beigefügten schematischen Zeichnungen näher erläutert. Es zeigt:
Fig. 1 ein erstes Ausführungsbeispiel einer Bremssystemdämpfvorrichtung gemäß der Erfindung,
Fig. 2 die Bremssystemdämpfvorrichtung in Fig. 1 bei einem ersten angelegten hydraulischen Druck,
Fig. 3 die Bremssystemdämpfvorrichtung in Fig. 1 bei einem zweiten angelegten hydraulischen Druck,
Fig. 4 ein Diagramm mit Kennlinien zur Abhängigkeit von Druck und Volumenaufnahme in Bremssystemdämpfvorrichtungen und
Fig. 5 ein zweites Ausführungsbeispiel einer Bremssystemdämpfvorrichtung gemäß der Erfindung,
Fig. 6 ein drittes Ausführungsbeispiel einer Bremssystemdämpfvorrichtung gemäß der Erfindung,
Fig. 7 das Detail VII gemäß Fig. 6,
Fig. 8 ein drittes Ausführungsbeispiel einer Bremssystemdämpfvorrichtung gemäß der Erfindung,
Fig. 9 das Detail IX gemäß Fig. 8.

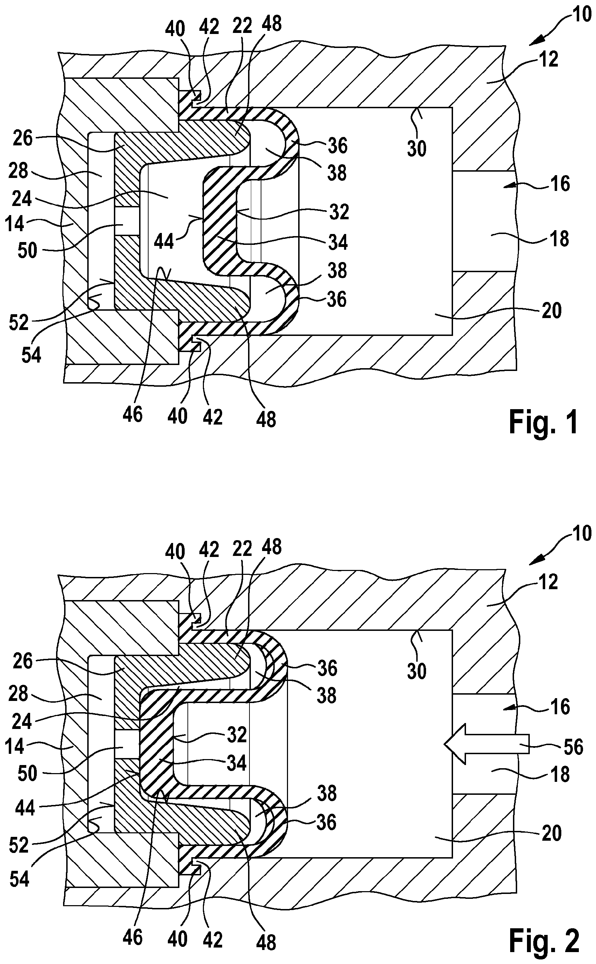

In der Fig. 1 ist eine Bremssystemdämpfvorrichtung 10 mit einem Gehäuse 12 und einem Deckel 14 dargestellt. In dem Gehäuse 12 ist eine Zuleitung 16 angeordnet, in der vorliegend kein hydraulischer Druck anliegt, dargestellt mittels eines durchkreuzten Pfeils 18. Die Zuleitung 16 mündet in einen ersten Raum 20, an den sich ein erstes Trennelement 22, hier eine Rollmembran, anschließt. Vom ersten Raum 20 gesehen hinter dem ersten Trennelement 22 befindet sich ein zweiter Raum 24, an den sich ein zweites Trennelement 26 anschließt, wobei sich in Betrachtungsrichtung hinter dem zweiten Trennelement 26 ein dritter Raum 28 befindet.

Im Detail sehen diese Räume 20, 24, 28 und Trennelemente 22, 26 folgendermaßen aus. Der erste Raum 20 ist umgeben von einer Gehäuseinnenwand 30 und einer ersten Trennelementinnenwand 32 des ersten Trennelements 22, im Folgenden als Rollmembran bezeichnet. Mittig in dem Trennelement 22 und mit diesem einstückig ausgebildet ist ein Verschlusselement 34 angeordnet, von dem sich das Trennelement 22 weiter nach außen zu einer Membranfalte 36 erstreckt. Innerhalb der Memranfalte 36 bzw. von dieser umgeben befindet sich eine Membranfaltensenke 38. Im Anschluß an die Membranfalte 36 erstreckt sich das Trennelement 22 bis zu einem Membrankragen 40, der eine Kopplungsfassung 42 des Gehäuses 12 umgreift. Das als Rollmembran gestaltete Trennelement 22 liegt mit einem Teil seiner Trennelementinnenwand 32 dichtend an der Gehäuseinnenwand 30 an, und ist mit einer ersten Trennelementaußenwand 44 dem zweiten Raum 24 zugewandt. Der zweite Raum 24 ist umgeben von der ersten Trennelementaußenwand 44 und einer zweiten Trennelementinnenwand 46 des zweiten Trennelements 26.

Das zweite Trennelement 26 erstreckt sich mit einer Membranhalteeinrichtung 48 in die Membranfaltensenke 38. Mittig in dem zweiten Trennelement 26 ist ein Durchlass 50 angeordnet, welcher den zweiten Raum 24 mit dem dritten Raum 28 verbindet. Dabei führt der Durchlass 50 durch die zweite Trennelementinnenwand 46, das zweite Trennelement 26 und ein zweite Trennelementaußenwand 52 hindurch. Der dritte Raum 28 ist umgeben von der zweiten Trennelementaußenwand 52 und einer Deckelinnenwand 54 des Deckels 14.

Im dargestellten Ausgangszustand der Bremssystemdämpfvorrichtung 10 liegt in dem ersten Raum 20, in dem sich ein Bremsmedium befindet, zunächst kein hydraulischer Druck an. Das Trennelement 22, welches aus einem Elastomer hergestellt ist, befindet sich hier im Wesentlichen in ihrer Grundform. Dabei liegt sie an der Gehäuseinnenwand 30 derart an, dass der erste Raum 20 zum zweiten Raum 24 hermetisch abgedichtet ist, wobei sich in dem zweiten Raum 24 ein Gas befindet, hier speziell Luft. Dieses Gas befindet sich auch in dem dritten Raum 28, der mittels des Durchlasses 50 mit dem zweiten Raum 24 verbunden ist. Somit bilden diese beiden Räume 24, 28 ein gemeinsames für die Dämpfung verfügbares Gasvolumen. Aufgrund der größeren Elastizität dieses Gasvolumens wird beim Bremsen bzw. beim Anlegen eines hydraulischen Drucks an den ersten Raum 20 eine bessere Dämpfwirkung erzielt.

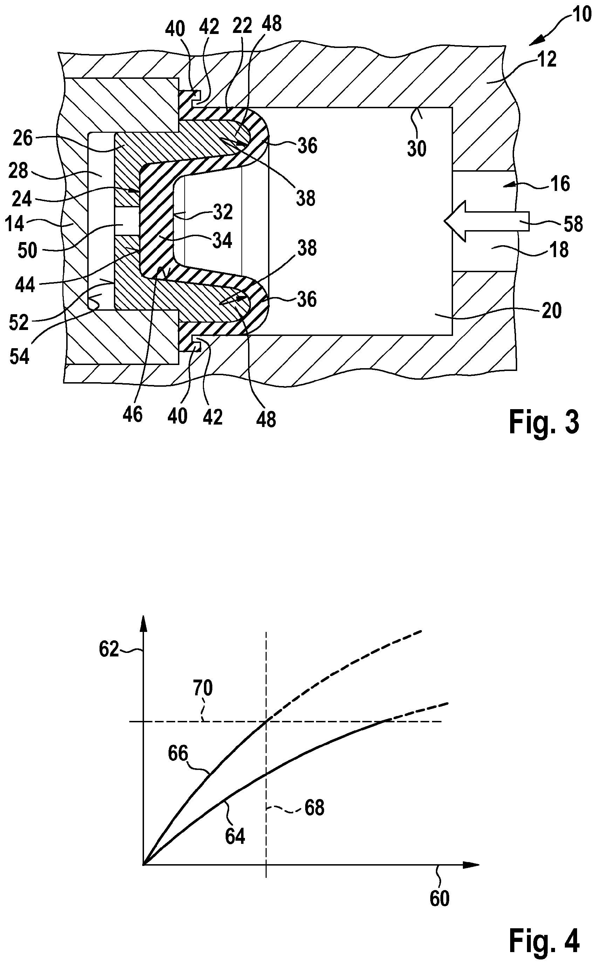

Wenn ein hydraulischer Druck im ersten Raum 20 anliegt, verformt sich das Trennelement 22 derart, dass sich das Gasvolumen im zweiten Raum 24 verkleinert. Das Verschlusselement 34 bewegt sich dabei in den zweiten Raum 24 hinein. Ab einem bestimmten hydraulischen Druck, der oberhalb eines für die Dämpfung relevanten Druckbereichs festgelegt ist, liegt das Verschlusselement 34 an der zweiten Trennelementinnenwand 46 des zweiten Trennelements 26 an und verschließt den Durchlass 50 zum dritten Raum 28. Dabei wirkt das zweite Trennelement 26 wie ein Anschlag. Zustände der Bremssystemdämpfvorrichtung 10, bei denen das Trennelement 22 bzw. dessen Verschlusselement 34 an dem zweiten Trennelememt 26 anliegt und den Durchlass 50 verschließt, sind in Fig. 2 und Fig. 3 dargestellt.

Aufgrund des verschlossenen Durchlasses 50 ist der dritte Raum 28 nun vom zweiten Raum 24 getrennt, wodurch für die weitere Dämpfung nur noch das verbliebene Gasvolumen im zweiten Raum 24 verwendet werden kann. Die Elastizität und Dämpfwirkung ist nur noch gering, denn der zweite Raum 24 kann kaum noch Volumen aufnehmen. Diese Wirkung ist gewollt, denn so wird auch der Weg eines mit dem Bremssystem verbundenen Bremspedals nicht mehr wesentlich verlängert. Bei dem in Fig. 3 dargestellten Zustand der Bremssystemdämpfvorrichtung 10 liegen das Trennelement 22 und das zweite Trennelement 26 lückenlos bzw. vollflächig aneinander an, sodass der zweite Raum 24 gänzlich verschwindet bzw. kein Volumen mehr hat. In diesem Fall verlängert sich der Weg des Bremspedals nicht mehr.

Sobald der im ersten Raum 20 anliegende hydraulische Druck nachlässt, bewegt sich das Trennelement 22 wieder in ihren Ausgangszustand bzw. ihre Ausgangsposition zurück.

Die Fig. 2 zeigt die Bremssystemdämpfvorrichtung 10 aus Fig. 1, allerdings in einem Zustand, bei dem an dem ersten Raum 20 ein erster hydraulischer Druck anliegt, dargestellt mittels eines Pfeils 56 im Bereich der Zuleitung 16.

Wie bereits erwähnt, liegt das Verschlusselement 34 dabei an der zweiten Trennelementinnenwand 46 des zweiten Trennelements 26 an und verschließt den Durchlass 50 zum dritten Raum 28. Für die weitere Dämpfung ist somit nur noch das verbliebene Volumen im zweiten Raum 24 verwendbar. In der Darstellung von Fig. 2 ist das hauptsächlich der Bereich um die Membranhalteeinrichtung 48. Die Auswirkungen auf die Dämpfung und den Bremsvorgang wurden bereits ausführlich in der Beschreibung zu Fig. 1 ausgeführt und werden hier daher nicht erneut beschrieben.

In der Fig. 3 ist die Bremssystemdämpfvorrichtung 10 aus Fig. 1 dargestellt, allerdings in einem Zustand, bei dem an dem ersten Raum 20 ein zweiter hydraulischer Druck anliegt, dargestellt mittels eines Pfeils 58 im Bereich der Zuleitung 16.

Wie bereits erwähnt, liegt das Verschlusselement 34 dabei an der zweiten Trennelementinnenwand 46 des zweiten Trennelements 26 an und verschließt den Durchlass 50 zum dritten Raum 28. Darüber hinaus liegen das Trennelement 22 und das zweite Trennelement 26 lückenlos aneinander an, sodass der zweite Raum 24 kein Volumen mehr aufweist. Die damit verbundenen Auswirkungen auf die Dämpfung und den Bremsvorgang wurden bereits ausführlich in der Beschreibung zu Fig. 1 ausgeführt und werden daher hier nicht erneut beschrieben.

Die Fig. 4 zeigt ein Diagramm zur Abhängigkeit zwischen einem Druck 60 und einer Volumenaufnahme 62 in derartigen Bremssystemdämpfvorrichtungen.

Dabei ist der Druck 60 auf der x-Achse und die Volumenaufnahme 62 auf der y-Achse abgebildet. Von einem Koordinatenursprung des Diagramms aus erstrecken sich eine erste Kennlinie 64 und eine zweite Kennlinie 66. Zudem zeigt das Diagramm eine die x-Achse kreuzende vertikale, gestrichelte Linie 68 und eine die y-Achse kreuzende horizontale, gestrichelten Linie 70.

Die erste Kennlinie 64 zeigt die Abhängigkeit zwischen Druck und Volumenaufnahme für eine Bremssystemdämpfvorichtung mit einem kleinen Volumen von für die Dämpfung zur Verfügung stehendem Medium. Für diese Kennlinie 64 sei hier vereinfacht das Volumen des zweiten Raumes 24 in Fig. 1 angenommen.

Die zweite Kennlinie 66, welche sich oberhalb der ersten Kennlinie 64 erstreckt, zeigt die Abhängigkeit von Druck und Volumenaufnahme für eine Bremssystemdämpfvorrichtung mit einem dazu vergleichsweise großen Volumen von für die Dämpfung zur Verfügung stehendem Medium. Vereinfachend wird hier für die Kennlinie 66 das summierte Volumen des zweiten und dritten Raumes 24, 28 in Fig. 1 angenommen.

Mit der die x-Achse kreuzenden vertikalen, gestrichelten Linie ist ein vordefinierter Druckwert 68 dargestellt, der die Obergrenze eines Druckbereichs bildet, der für die Pulsationsdämpfung in derartigen Bremssystemen relevant ist. Dieser relevante Druckbereich erstreckt sich somit vom Koordinatenursprung bis zur gestrichelter Linie.

Mit der die y-Achse kreuzenden horizontalen, gestrichelten Linie ist ein Volumenanschlag 70 für die erfindungsgemäße Bremssystemdämpfvorrichtung 10 dargestellt. Dieser Volumenanschlag liegt in etwa bei dem Volumen des zweiten Raumes 24 in Fig. 1.

Mittels entsprechender Auslegung der jeweiligen Volumina des zweiten und dritten Raumes 24, 28 ist die Bremssystemdämpfvorrichtung 10 auf den relevanten Druckbereich und die gewünschte Elastizität bzw. Dämpfwirkung in diesem Druckbereich abgestimmt. Bei einer optimalen Abstimmung, wie in dem Diagramm von Fig. 4 dargestellt, kreuzen sich die getrichelten Linien 68, 70 mit der Kennlinie 66 in einem Punkt.

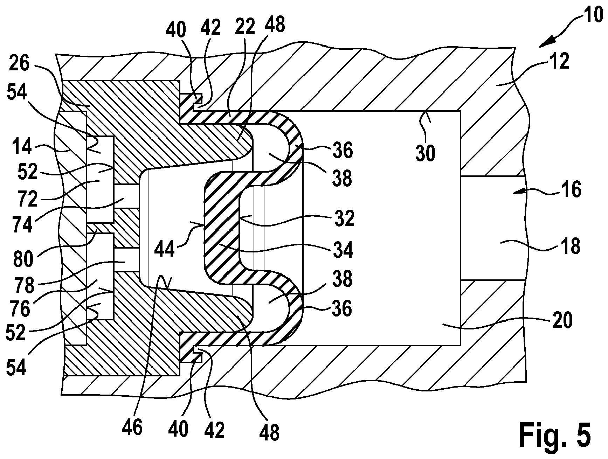

In Fig. 5 ist eine Bremssystemdämpfvorrichtung 10 dargestellt, die sich von der in Fig. 1 nur in dem Bereich unterscheidet, in dem das als Rollmembran gestaltete erste Trennelement 22 mit der ersten Trennelementaußenwand 44 zugewandt ist. Das Trennelement 22 selbst und der Bereich, dem das Trennelement 22 mit der ersten Trennelementinnenwand 32 zugewandt ist, stimmen vollständig mit der Fig. 1 überein, und werden hier nicht erneut beschrieben.

Der Hauptunterschied zu der Bremssystemdämpfvorrichtung 10 in Fig. 1 ist der, dass anstelle des dritten Raumes 28 und dem zugehörigen Durchlass 50 in Fig. 1, die Bremssystemdämpfvorrichtung 10 hier in Fig. 5 einen ersten Teilraum 72 mit einem Durchlass 74 und einen zweiten Teilraum 76 mit einem zweiten Durchlass 78 aufweist. Dabei sind die beiden Teilräume 72, 76 mittels einer Trennwand 80 separiert. Ein weiterer Unterschied zu Fig. 1 besteht darin, das sich hier in Fig. 5 das zweite Trennelement 26 bis zur Gehäuseinnenwand 30 erstreckt und den Deckel 14 von dieser separiert.

Alle weiteren Merkmale entsprechen denen in Fig. 1. So ist der zweite Raum 24 auch hier umgeben von der ersten Trennelementaußenwand 44 und einer zweiten Trennelementinnenwand 46 des zweiten Trennelements 26. Ebenfalls erstreckt sich das zweite Trennelement 26 hier mit einer Membranhalteeinrichtung 48 in die Membranfaltensenke 38 des Trennelements 22. Zudem sind die Teilräume 72, 76 neben der Trennwand 80, wie der dritte Raum 28 in Fig. 1 umgeben von der zweiten Trennelementaußenwand 52 und einer Deckelinnenwand 54 des Deckels 14.

Die Funktionsweise ist hier ähnlich wie bei der Bremssystemdämpfvorrichtung 10 in Fig. 1. Wenn im ersten Raum 20 ein hydraulischer Druck anliegt, verformt sich auch hier das Trennelement 22 derart, dass sich das Gasvolumen im zweiten Raum 24 verkleinert. Dabei bewegt sich das Verschlusselement 34 in den zweiten Raum 24 hinein und liegt ab einem bestimmten hydraulischen Druck, der idealerweise der Obergrenze des relevanten Druckbereichs entspricht, an dem zweiten Trennelement 26 an und verschließt die Durchlässe 74, 78 zu den Teilräumen 72, 76.

Sobald der im ersten Raum 20 anliegende hydraulische Druck nachlässt, bewegt sich das als Rollmembran gestaltete Trennelement 22 wieder in ihren Ausgangszustand bzw. ihre Ausgangsposition zurück. Dadurch sind die Durchlässe 74, 78 dann wieder geöffnet und die Teilräume 72, 76 wieder mit dem zweiten Raum 24 verbunden.

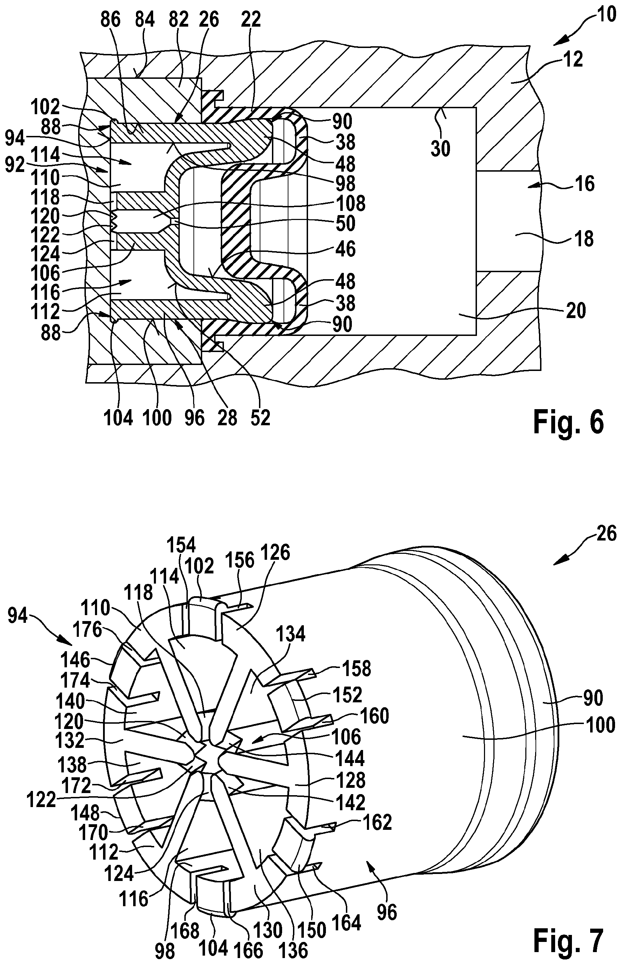

Die Fig. 6 zeigt eine Bremssystemdämpfvorrichtung 10, die sich von der in Fig. 1 in der Ersetzung des Deckels 14 und insbesondere der Gestaltung des zweiten Trennelements 26 unterscheidet. Die übrigen Komponenten in Fig. 6 stimmen mit denen in Fig. 1 überein, und werden hier nicht erneut beschrieben. Nur so viel, im dargestellten Zustand der Bremsystemdämpfvorrichtung 10 liegt an der Zuleitung 16 kein hydraulischer Druck 18 an dem ersten Raum 20 an, sodass sich das erste Trennelement 22 in einer Normalform bzw. Ausgangsform wie in Fig.1 befindet. An die Stelle des Deckels 14 in Fig. 1 tritt in Fig. 6 ein Bauteil 82 mit einer Bauteilaußenwand 84 und einer Bauteilinnenwand 86. Dieses Bauteil 82 ist hier ebenfalls als ein Deckel verwendbar. Dabei liegt das Bauteil 82 an dem ersten Trennelement 22 so an, dass das zweite Trennelement 26 vollständig von dem Bauteil 82 und dem ersten Trennelement 22 umschlossen ist. Die Bauteilinnenwand 86 weist eine das zweite Trennelement 26 umlaufende Vertiefung 88 auf, welche hier in maximaler Entfernung von dem ersten Trennelement 22 angeordnet ist. Die Bauteilaußenwand 84 liegt an dem Gehäuse 30 bzw. deren Gehäuseinnenwand 30 an.

Das zweite Trennelement 26 ist auf der Seite der Trennelementinnenwand 46 im Wesentlichen genauso gestaltet, wie bei dem zweiten Trennelement 26 in Fig. 1. Der Unterschied hier liegt nur darin, dass die Membranhalteeinrichtung 48 innerhalb der Membranfaltensenke 38 trompeten- bzw. wulstförmig nach außen bzw. in Richtung der Gehäuseinnenwand 30 gespreizt gestaltet ist, hier als Außenwölbung 90 bezeichnet. Auf der Seite der Trennelementaußenwand 52 weist das zweite Trennelement 26 eine Rippenstruktur 92 auf, welche sich von der Trennelementaußenwand 52 bis zu einer Strukturendseite 94 erstreckt, und so den gesamten dritten Raum 28 durchsetzt. Die Rippenstruktur 92 ist mit dem zweiten Trennelement 26 einstückig gestaltet und zudem von einem Rippenmantel 96 mit einer Mantelinnenwand 98 und einer Mantelaußenwand 100 umgeben. Der Rippenmantel 96 erstreckt sich von der Trennelementaußenwand 52, genauer von der Membranhalteeinrichtung 48 bis zur Strukturendseite 94. Auf der Mantelaußenwand 100 sind benachbart zur Strukturendseite 94 mehrere Rastelemente, hier nur die Rastelemente 102 und 104 sichtbar, angeordnet, die in der Vertiefung 88 eingerastet angeordnet sind. Innerhalb der Mitte der Rippenstruktur 92 ist ein Kreishohlzylinder 106 mit einem Zylinderhohlraum 108 angeordnet, der an der Trennelementaußenwand 52 derart ansetzt, dass der Durchlass 50 zu dem Zylinderhohlraum 108 führt. Vom dem Kreishohlzylinder 106 erstrecken sich mehrere Strukturrippen, von denen hier nur die Strukturrippen 110 und 112 sichtbar sind, bis zum Rippenmantel 96 bzw. dessen Mantelinnenwand 98. Die Strukturrippen 110, 112 unterteilen den dritten Raum 28 innerhalb des Ringmantels 96 in mehrere Strukturteilräume, von denen hier nur die Strukturteilräume 114 und 116 sichtbar sind. Die Strukturräume sind mittels Verbindungskanälen, von denen hier nur die Verbindungskanäle 118, 120, 122 und 124 sichtbar sind, mit dem Zylinderhohlraum 108 verbunden. Dabei sind die Verbindungskanäle 118, 120, 122, 124 an der Strukturendseite 94 angeordnet.

Die hier dargestellt Bremssystemdämpfvorrichtung 10 ist in ihrer grundsätzlichen Funktionsweise vergleichbar mit der Bremssystemdämpfvorrichtung 10 in Fig. 1. Auch hier liegt beispielsweise das Bauteil 82, wie der Deckel 14 in Fig. 1, stabilisierend an dem ersten Trennelement 22 an. Hinzu kommen in dieser in Fig. 6 dargestellten Bremssystemdämpfvorrichtung 10 die stützende Funktion der Rippenstruktur 92, welche zudem ein abstufendes Einstellen des Dämpfungsgrads ermöglicht, sowie das einrastende Verankern des zweiten Trennelements 26 in dem Bauteil 82, hier als Deckel gestaltet. Der Stützeffekt wird dadurch erreicht, dass sich alle Komponenten der Rippenstruktur 92 von der Trennelementaußenwand 52 bis zu der Strukturendseite 94 erstrecken, wobei die Strukturendseite an der Bauteilinnenwand 86 anliegt. Das Einstellen des Dämpfungsgrades ist mittels Verschließen eines oder mehrerer der Verbindungskanäle 118, 120, 122, 124 zu den Strukturteilräumen 114, 116 durchführbar. Das einrastende Verankern in dem Bauteil 82 erfolgt mittels der Rastelemente 102, 104. Beim Einfügen des zweiten Trennelements 26 in das Bauteil 82 bzw. beim Aufschieben des Bauteils 82 auf das zweite Trennelement 26 werden die Rastelemente 102, 104 nach innen, also in den Rippenmantel 96 hineingedrückt. Sobald die Strukturendseite 94 die Bauteilinnenwand 86 erreicht hat, rasten die Rastelemente 102, 104 in die dafür vorgesehene Vertiefung 88 in dem Bauteil 82 ein.

In Fig. 7 ist das zweite Trennelement 26 aus Fig. 6 perspektivisch mit Blick auf die Strukturendseite 94 dargestellt. Die Rippenstruktur 92 ist daher besonders gut sichtbar. Deutlicher erkennbar sind hier auch die Außenwölbung 90 und die Mantelaußenwand 100. Neben den Strukturrippen 110 und 112 sind nun auch die weiteren Strukturrippen 126, 128, 130 und 132 dargestellt, die sich von dem Kreishohlzylinder 106 bis zum Rippenmantel 96 bzw. deren Mantelinnenwand 98 erstrecken. Zwischen den Strukturrippen 110, 112, 126, 128, 130, 132 sind die Strukturteilräume 114, 116, 134, 136, 138, 140 angeordnet und mittels der Verbindungskanäle 118, 120, 122, 124, 142, 144 mit dem Zylinderhohlraum 108 verbunden. Auf der Mantelaußenwand 100 und an der Strukturendseite 94 sind neben den Rastelementen 102 und 104 nun auch die weiteren Rastelemente 146, 148, 150, 152 dargestellt. Jedes dieser Rastelement 102, 104, 146, 148, 150, 152 an zwei von mehreren Mantelschlitzen 154, 156, 158,160, 162, 164, 166, 168, 170, 172, 174, 176 anliegend angeordnet, wobei sich die Mantelschlitze 154, 156, 158, 160, 162, 164, 166, 168, 170, 172, 174, 176 von der Strukturendseite 94 in Richtung der Außenwölbung 90 erstrecken.

Die hier neu dargestellten Komponenten, die denen in Fig. 6 dargestellten in der namentlichen Bezeichnung gleichen, wie beispielsweise die weiteren Rastelemente 146, 148, 150, 152, haben auch die gleiche Funktion. Daher werden solche Komponenten nicht erneut in ihrer Funktion erläutert. Völlig neu sichtbar, und daher in ihrer Funktionalität noch nicht beschrieben, sind die Mantelschlitze 154, 156, 158, 160, 162, 164, 166, 168, 170, 172, 174, 176. Diese erfüllen nicht nur den Zweck, zusätzliches Volumen des dritten Raums 28 zur Verfügung zu stellen. Insbesondere gliedern die Mantelschlitze 154, 156, 158, 160, 162, 164, 166, 168, 170, 172, 174, 176 den Rippenmantel 96 aus Sicht der Strukturendseite 94 derartig, dass die Rastelemente 102, 104, 146, 148, 150, 152 separiert werden. Je nach Flexibilität des Materials des zweiten Trennelements 26 lassen sich die Bereiche des Rippenmantels 96, an denen eines der Rastelemente 102, 104, 146, 148, 150, 152 angeordnet ist, mehr oder weniger leicht nach innen drücken. Dadurch wird die zu Fig. 6 beschriebene Montage des zweiten Trennelements 26 und/oder des Bauteils 82 wesentlich erleichtert.

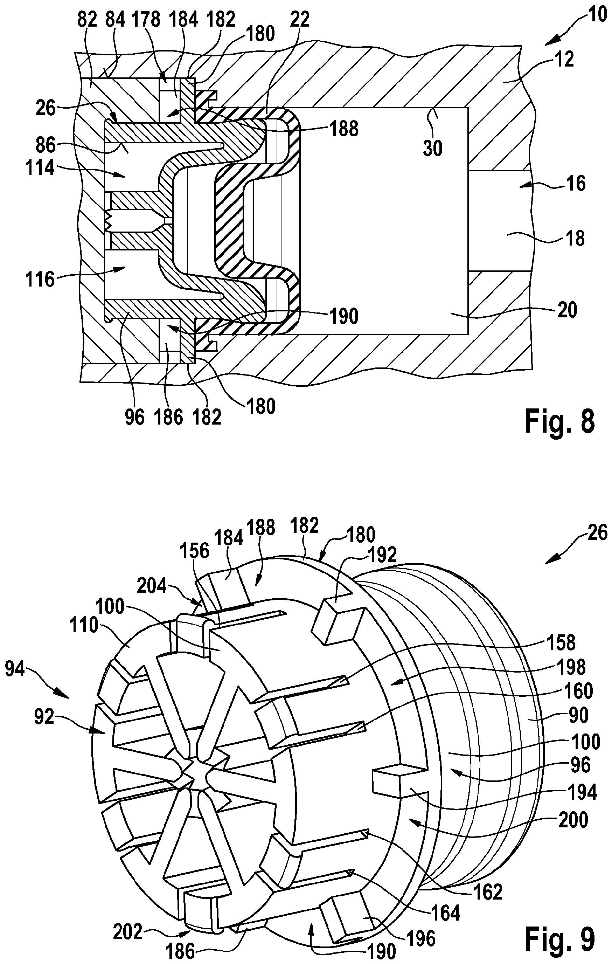

Die Fig. 8 zeigt eine Bremssystemdämpfvorrichtung 10, die sich von der in Fig. 6 in der Gestaltung des Bauteils 82 und des zweiten Trennelements 26 unterscheidet. Somit ist auch hier mittels der Zuleitung 16 kein hydraulischer Druck 18 an dem ersten Raum 20 angelegt. Anders als in Fig. 6 reicht das Bauteil 82 mit seiner Bauteilaußenwand 84 und Bauteilinnenwand 86 hier in Fig. 8 nicht an das erste Trennelement 22 heran. Dadurch ist ein das zweite Trennelement 26 bzw. dessen Rippenmantel 96 umlaufender vierter Raum 178 ausgebildet. Das zweite Trennelement 26 weist hier einen den Rippenmantel 96 umlaufenden Auflagering 180 auf und ist mit diesem einstückig gestaltet. Der Auflagering 180 weist einem Ringaußenrand 182 auf und ragt derart in den vierten Raum 178 hinein, dass er an dem ersten Trennelement 22 anliegt, und zudem mit dem Ringaußenrand 182 an dem Gehäuse 12 bzw. der Gehäuseinnenwand 30 abschließt. Der vierte Raum 178 ist somit von dem Gehäuse 12, dem Bauteil 82 und dem zweiten Trennelement 26 bzw. dem Rippenmantel 96 und dem Auflagering 180 des zweiten Trennelements 26 umgeben bzw. ausgebildet.

Der vierte Raum 178 ist mittels mehrerer Ringrippen, von denen hier nur die zwei Ringrippen 184 und 186 dargestellt sind, in mehrere Ringteileräume, von denen hier nur die Ringteilräume 188 und 190 dargestellt sind, aufgeteilt. Dabei sind die Ringteilräume 188, 190 mittels der - nur in den Figuren 7 und 9 dargestellten - Mantelschlitze 154, 154, 166, 168 mit den Strukturteilräumen 114, 116 mediumleitend verbunden. Alle weiteren Komponenten und Details in Fig. 8 entsprechen denen in Fig. 6, und werden hier nicht erneut aufgeführt.

Die hier dargestellte Bremssystemdämpfvorrichtung 10 ist in ihrer grundsätzlichen Funktionsweise vergleichbar mit der Bremssystemdämpfvorrichtung 10 in Fig. 6. Jedoch liegt das Bauteil 82 hier nicht mehr stabilisierend an dem ersten Trennelement 22 an. Diese Aufgabe übernimmt hier der Auflagering 180 des zweiten Trennelements 26. Der aufgrund des kleineren bzw. kürzeren Bauteils 82 entstandene vierte Raum 178 steht nun als zusätzliches Volumen zur Verfügung, wodurch ein noch höherer Dämpfungsgrad der Bremssystemdämpfvorrichtung 10 erreicht wird. Aufgrund der Aufteilung des vierten Raums 178 in mehrere Ringteilräume 188, 190 ist der Dämpfungsgrad auch hier abstufbar. Zudem stützen die den vierten Raum 178 aufteilenden Ringrippen 184, 186 den Auflagering 180 gegen das Bauteils 82 ab.

In Fig. 9 ist das zweite Trennelement 26 aus Fig. 8 perspektivisch dargestellt. Die Außenwölbung 90 und die Mantelaußenwand 100 des Rippenmantels 96 sind ebenfalls wieder deutlich erkennbar. Im Fokus stehen in Fig. 9 insbesondere der Auflagering 180 mit seinem Ringaußenrand 182 und die an dem Auflagering 180 angeordneten Ringrippen, von denen hier neben den Ringrippen 184 und 186 weitere Ringrippen 192, 194, 196 dargestellt sind. Die Rippenstruktur 92 an der Strukturendseite 94 ist in der hier dargestellten Perspektive nicht gut erkennbar, entspricht aber der Rippenstruktur 92 in Fig. 7. Gut erkennbar sind die Mantelschlitze 156, 158, 160, 162 und 164 in dem Rippenmantel 96, welche sich von der Strukturendseite 94 in Richtung des Auflagerings 180 erstrecken. Der Auflagering 180 und die Ringrippen 184, 186, 192, 194, 196 sind auf der Mantelaußenwand 100 derart angeordnet, dass die Mantelschlitze 156, 158, 160, 162, 164 näher an den Auflagering 180 heranreichen, als die Ringrippen 184, 186, 192, 194, 196 von diesem abstehen. Nur so sind Ringteilräume, von denen hier neben den Ringteilräumen 188 und 190 auch weitere Ringteilräume 198, 200, 202, 204 angedeutet sind, mit den - nur in Fig. 7 dargestellten - Strukturteilräumen 114, 116, 134, 136, 138, 140 mediumleitend verbunden.

Die hier neu dargestellten Komponenten, die denen in Fig. 8 dargestellten in der namentlichen Bezeichnung gleichen, wie beispielsweise die weiteren Ringrippen 192, 194, 196, haben auch die gleiche Funktion. Daher werden solche Komponenten nicht erneut in ihrer Funktion erläutert. Hier wieder neu sichtbar, und daher in ihrer Funktionalität in Fig. 8 noch nicht beschrieben, sind die Mantelschlitze 154, 156, 158, 160, 162, 164. Die übrigen in Fig. 7 dargestellten Mantelschlitze 166, 168, 170, 172, 174, 176 sind für diese Ausführungsform nicht dargestellt. Da das zweite Trennelement 26 aber symmetrisch gestaltet ist, lässt sich auf ein Gesamtbild anhand der sichtbar dargestellten Komponenten schließen. Zudem lässt sich anhand der Fig. 8 und der Fig. 9 in Kombination darauf schließen, wie die Ringteilräume 188, 190, 198, 200, 202, 204 mittels der Mantelschlitze 154, 156, 158, 160, 162, 164 mit der Ringstruktur 92 innerhalb des Rippenmantels 96 verbunden sind.

## Patentansprüche

1. Bremssystemdämpfvorrichtung (10) mit einem ersten Raum (20), an den hydraulischer Druck anzulegen ist, und einem zweiten Raum (24), in dem sich ein kompressibles Medium befindet, und einem ersten Trennelement (22) zum Abtrennen des ersten Raumes (20) vom zweiten Raum (24),
wobei die Bremssystemdämpfvorrichtung (10) einen dritten Raum (28), in dem sich ein kompressibles Medium befindet, und ein zweites Trennelement (26) zum Abtrennen des zweiten Raumes (24) vom dritten Raum (28) aufweist, wobei der zweite Raum (24) mit dem dritten Raum (28) mittels eines in dem zweiten Trennelement (26) gestalteten Durchlasses (50) mediumleitend verbunden ist, **dadurch gekennzeichnet, dass** mit dem ersten Trennelement (22) ein Verschlusselement (34) zu bewegen ist, mittels dem der Durchlass (50) zu verschließen ist, sobald in dem ersten Raum (20) der hydraulische Druck einen vordefinierten Druckwert (68) erreicht hat, derart, dass aufgrund des verschlossenen Durchlasses (50) der dritte Raum (28) vom zweiten Raum (24) abgekoppelt ist und somit nicht mehr für die restliche Bremssystemdämpfvorrichtung (10) zur Verfügung steht, sodass für die weitere Dämpfwirkung oberhalb des vordefinierten Druckwerts (68) nur noch das Mediumvolumen im zweiten Raum (24) verbleibt.

2. Bremssystemdämpfvorrichtung nach Anspruch 1,
**dadurch gekennzeichnet, dass** das erste Trennelement (22) einstückig mit dem Verschlusselement (34) ausgebildet ist.

3. Bremssystemdämpfvorrichtung nach Anspruch 1 oder 2,
**dadurch gekennzeichnet, dass** das erste Trennelement (22) mit einer Membran, vorzugsweise mit einer Rollmembran gestaltet ist.

4. Bremssystemdämpfvorrichtung nach einem der Ansprüche 1 bis 3, **dadurch gekennzeichnet, dass** das erste Trennelement (22) aus einem Elastomer, vorzugsweise aus Ethylen-Propylen-Dien-Kautschuk, hergestellt ist.

5. Bremssystemdämpfvorrichtung nach einem der Ansprüche 1 bis 4, **dadurch gekennzeichnet, dass** der vordefinierte Druckwert mit einem Wert zwischen 0 und 30 bar, vorzugsweise zwischen Bereich 3 und 10 bar, und besonders bevorzugt mit 5 bar vordefiniert ist.

6. Bremssystemdämpfvorrichtung nach einem der Ansprüche 1 bis 5, **dadurch gekennzeichnet, dass** der Durchlass (50) mit einem offenporigen Material gebildet ist.

7. Bremssystemdämpfvorrichtung nach einem der Ansprüche 1 bis 6, **dadurch gekennzeichnet, dass** in dem zweiten Trennelement (26) mehrere Durchlässe (74, 78) vorgesehen sind.

8. Bremssystemdämpfvorrichtung nach einem der Ansprüche 1 bis 7, **dadurch gekennzeichnet, dass** der dritte Raum (28) in mehrere Teilräume (72, 76) unterteilt ist, die jeweils mit dem zweiten Raum (24) mittels eines Durchlasses (74, 78) mediumleitend verbunden sind.

9. Bremssystemdämpfvorrichtung nach einem der Ansprüche 1 bis 8, **dadurch gekennzeichnet, dass** der dritte Raum (28) mittels des zweiten Trennelements (26) und eines Deckels (14) gebildet ist.

10. Bremssystemdämpfvorrichtung nach Anspruch 9,
**dadurch gekennzeichnet, dass** das zweite Trennelement (26) von dem Deckel (14) und dem ersten Trennelement (22) vollständig umschlossen ist.

11. Bremssystemdämpfvorrichtung nach einem der Ansprüche 1 bis 10, **dadurch gekennzeichnet, dass** die Bremssystemdämfvorrichtung eine das zweite Trennelement (26) stützende und den dritten Raum (28) durchsetzende Rippenstruktur (92) mit mindestens einer Strukturrippe (110, 112, 126, 128, 130, 132) aufweist.

12. Bremssystemdämpfvorrichtung nach Anspruch 11,
**dadurch gekennzeichnet, dass** die Rippenstruktur (92) mindestens zwei Strukturteilräume (114, 116, 134, 136, 138, 140) bildet, die mittels mindestens eines Verbindungskanals (118, 120, 122, 124, 142, 144) mediumleitend miteinander verbunden sind.

13. Bremssystemdämpfvorrichtung nach Anspruch 11 oder 12,
**dadurch gekennzeichnet, dass** die Rippenstruktur (92) einen Rippenmantel (96) aufweist, der die Rippenstruktur (92) umgebend gestaltet ist.

14. Bremssystemdämpfvorrichtung nach Anspruch 13,
**dadurch gekennzeichnet, dass** der Rippenmantel mit mindestens einem Mantelschlitz (154, 156, 158, 160, 162, 164, 166, 168, 170, 172, 174, 176) gestaltet ist, wobei der Mantelschlitz (154, 156, 158, 160, 162, 164, 166, 168, 170, 172, 174, 176) dafür vorgesehen ist, den Rippenmantel (96) zu den Strukturteilräumen (114, 116, 134, 136, 138, 140) hin zu öffnen.

15. Bremssystemdämpfvorrichtung nach Anspruch 13 oder 14,
**dadurch gekennzeichnet, dass** der Rippenmantel (96) mit mindestens einem Rastelement (102, 104, 146, 148, 150, 152) gestaltet ist, wobei das Rastelement (102, 104, 146, 148, 150, 152) vorzugsweise von einer Mantelaußenwand (100) abstehend und vorzugsweise an einer Strukturendseite (94) angeordnet ist.

## Claims

1. Brake system damping device (10) having a first chamber (20), to which hydraulic pressure is to be applied, and a second chamber (24), in which a compressible medium is situated, and a first separating element (22) for separating the first chamber (20) from the second chamber (24), wherein the brake system damping device (10) has a third chamber (28), in which a compressible medium is situated, and a second separating element (26) for separating the second chamber (24) from the third chamber (28), wherein the second chamber (24) is connected to the third chamber (28) in a medium-conducting manner by means of a passage (50) configured in the second separating element (26), **characterized in that** a closure element (34) is to be moved together with the first separating element (22) and by means of which the passage (50) is to be closed as soon as the hydraulic pressure has reached a predefined pressure value (68) in the first chamber (20) in such a way that, on account of the closed passage (50), the third chamber (28) is decoupled from the second chamber (24) and is thus no longer available for the remainder of the brake system damping device (10), with the result that, for the further damping action above the predefined pressure value (68), there remains only the volume of medium in the second chamber (24).

2. Brake system damping device according to Claim 1, **characterized in that** the first separating element (22) is formed in one piece with the closure element (34) .

3. Brake system damping device according to Claim 1 or 2,
**characterized in that** the first separating element (22) is configured with a diaphragm, preferably with a rolling diaphragm.

4. Brake system damping device according to one of Claims 1 to 3,
**characterized in that** the first separating element (22) is produced from an elastomer, preferably from ethylene-propylene-diene rubber.

5. Brake system damping device according to one of Claims 1 to 4,
**characterized in that** the predefined pressure value is predefined with a value between 0 and 30 bar, preferably between a range of 3 and 10 bar, and particularly preferably at 5 bar.

6. Brake system damping device according to one of Claims 1 to 5,
**characterized in that** the passage (50) is formed with an open-pore material.

7. Brake system damping device according to one of Claims 1 to 6,
**characterized in that** a plurality of passages (74, 78) are provided in the second separating element (26) .

8. Brake system damping device according to one of Claims 1 to 7,
**characterized in that** the third chamber (28) is subdivided into a plurality of subchambers (72, 76) which are each connected to the second chamber (24) in a medium-conducting manner by means of a passage (74, 78).

9. Brake system damping device according to one of Claims 1 to 8,
**characterized in that** the third chamber (28) is formed by means of the second separating element (26) and a cover (14).

10. Brake system damping device according to Claim 9, **characterized in that** the second separating element (26) is completely enclosed by the cover (14) and the first separating element (22).

11. Brake system damping device according to one of Claims 1 to 10,
**characterized in that** the brake system damping device has a rib structure (92), with at least one structure rib (110, 112, 126, 128, 130, 132), which supports the second separating element (26) and traverses the third chamber (28).

12. Brake system damping device according to Claim 11, **characterized in that** the rib structure (92) forms at least two structure subchambers (114, 116, 134, 136, 138, 140) which are connected to one another in a medium-conducting manner by means of at least one connecting duct (118, 120, 122, 124, 142, 144).

13. Brake system damping device according to Claim 11 or 12,
**characterized in that** the rib structure (92) has a rib casing (96) which is configured to surround the rib structure (92).

14. Brake system damping device according to Claim 13, **characterized in that** the rib casing is configured with at least one casing slot (154, 156, 158, 160, 162, 164, 166, 168, 170, 172, 174, 176), wherein the casing slot (154, 156, 158, 160, 162, 164, 166, 168, 170, 172, 174, 176) is provided to open the rib casing (96) toward the structure subchambers (114, 116, 134, 136, 138, 140).

15. Brake system damping device according to Claim 13 or 14,
**characterized in that** the rib casing (96) is configured with at least one latching element (102, 104, 146, 148, 150, 152), wherein the latching element (102, 104, 146, 148, 150, 152) preferably protrudes from a casing outer wall (100) and is preferably arranged on a structure end side (94).

## Revendications

1. Dispositif d'amortissement de système de freinage (10) comprenant un premier espace (20), auquel une pression hydraulique doit être appliquée, et un deuxième espace (24), dans lequel se trouve un milieu compressible, et un premier élément de séparation (22) servant à la séparation du premier espace (20) du deuxième espace (24),
le dispositif d'amortissement de système de freinage (10) présentant un troisième espace (28), dans lequel se trouve un milieu compressible, et un deuxième élément de séparation (26) servant à la séparation du deuxième espace (24) du troisième espace (28), le deuxième espace (24) étant relié au troisième espace (28) de manière à assurer une conduction de milieu au moyen d'un passage (50) configuré dans le deuxième élément de séparation (26), **caractérisé en ce qu'**un élément de fermeture (34) doit être déplacé à l'aide du premier élément de séparation (22), élément de fermeture au moyen duquel le passage (50) doit être fermé dès que la pression hydraulique a atteint une valeur de pression prédéfinie (68) dans le premier espace (20), de telle sorte qu'en raison du passage fermé (50), le troisième espace (28) est découplé du deuxième espace (24) et par conséquent n'est plus disponible pour le reste du dispositif d'amortissement de système de freinage (10), de telle sorte qu'il ne reste plus que le volume de milieu dans le deuxième espace (24) pour l'effet d'amortissement supplémentaire au-dessus de la valeur de pression prédéfinie (68).

2. Dispositif d'amortissement de système de freinage selon la revendication 1,
**caractérisé en ce que** le premier élément de séparation (22) est formé d'une seule pièce avec l'élément de fermeture (34).

3. Dispositif d'amortissement de système de freinage selon la revendication 1 ou 2,
**caractérisé en ce que** le premier élément de séparation (22) est configuré avec une membrane, de préférence avec une membrane déroulante.

4. Dispositif d'amortissement de système de freinage selon l'une des revendications 1 à 3,
**caractérisé en ce que** le premier élément de séparation (22) est fabriqué à partir d'un élastomère, de préférence à partir de caoutchouc éthylène-propylène-diène.

5. Dispositif d'amortissement de système de freinage selon l'une des revendications 1 à 4,
**caractérisé en ce que** la valeur de pression prédéfinie est prédéfinie à une valeur entre 0 et 30 bar, de préférence entre une plage de 3 et 10 bar, et de manière particulièrement préférée à 5 bar.

6. Dispositif d'amortissement de système de freinage selon l'une des revendications 1 à 5,
**caractérisé en ce que** le passage (50) est formé par une matière à pores ouverts.

7. Dispositif d'amortissement de système de freinage selon l'une des revendications 1 à 6,
**caractérisé en ce que** plusieurs passages (74, 78) sont prévus dans le deuxième élément de séparation (26).

8. Dispositif d'amortissement de système de freinage selon l'une des revendications 1 à 7,
**caractérisé en ce que** le troisième espace (28) est divisé en plusieurs espaces partiels (72, 76) qui sont reliés respectivement au deuxième espace (24) au moyen d'un passage (74, 78) de manière à assurer une conduction de milieu.

9. Dispositif d'amortissement de système de freinage selon l'une des revendications 1 à 8,
**caractérisé en ce que** le troisième espace (28) est formé au moyen du deuxième élément de séparation (26) et d'un couvercle (14).

10. Dispositif d'amortissement de système de freinage selon la revendication 9,
**caractérisé en ce que** le deuxième élément de séparation (26) est complètement entouré par le couvercle (14) et le premier élément de séparation (22).

11. Dispositif d'amortissement de système de freinage selon l'une des revendications 1 à 10,
**caractérisé en ce que** le dispositif d'amortissement de système de freinage présente une structure nervurée (92) supportant le deuxième élément de séparation (26) et traversant le troisième espace (28), laquelle est dotée d'au moins une nervure structurale (110, 112, 126, 128, 130, 132).

12. Dispositif d'amortissement de système de freinage selon la revendication 11,
**caractérisé en ce que** la structure nervurée (92) forme au moins deux espaces partiels structuraux (114, 116, 134, 136, 138, 140) qui sont reliés les uns aux autres de manière à assurer une conduction de milieu au moyen d'au moins un canal de liaison (118, 120, 122, 124, 142, 144) .

13. Dispositif d'amortissement de système de freinage selon la revendication 11 ou 12,
**caractérisé en ce que** la structure nervurée (92) présente une enveloppe nervurée (96) qui est configurée de manière à entourer la structure nervurée (92).

14. Dispositif d'amortissement de système de freinage selon la revendication 13,
**caractérisé en ce que** l'enveloppe nervurée est configurée de manière à présenter au moins une fente d'enveloppe (154, 156, 158, 160, 162, 164, 166, 168, 170, 172, 174, 176), la fente d'enveloppe (154, 156, 158, 160, 162, 164, 166, 168, 170, 172, 174, 176) étant destinée à ouvrir l'enveloppe nervurée (96) en direction des espaces partiels structuraux (114, 116, 134, 136, 138, 140).

15. Dispositif d'amortissement de système de freinage selon la revendication 13 ou 14,
**caractérisé en ce que** l'enveloppe nervurée (96) est configurée de manière à présenter au moins un élément d'encliquetage (102, 104, 146, 148, 150, 152), l'élément d'encliquetage (102, 104, 146, 148, 150, 152) étant disposé de manière à faire saillie de préférence à partir d'une paroi extérieure d'enveloppe (100) et de préférence sur un côté d'extrémité structural (94).
